# EUROPEAN PATENT APPLICATION

(11) **EP 0 636 980 A1**
(43) Date of publication of application: **01.02.1995**
(21) Application number: 94305490.8
(22) Date of filing: 25.07.1994
(51) Int. Cl.: G06F 11/14

(54) **Apparatus and method for hibernation file creation**

(30) Priority: 26.07.1993 JP 184129/93
(71) Applicant: INTERNATIONAL BUSINESS MACHINES CORPORATION, Armonk, N.Y. 10504 (US)
(72) Inventor: Shimotono, Susumu, Hadano-shi, Kanagawa-ken (JP)
(74) Representative: Davies, Simon Robert

(57) **Abstract**

Provided is an apparatus and method for the determination of a logical file appropriate to the creation of a hibernation file.

A file with a predetermined name is created in a logical drive by selecting one such logical drive which the OS file system can access and which is larger than a predetermined size using an OS file system. The fact is then notified to the PM (power management) that said file was created (steps 605 through 608). The presence of confirmation that a file with a predetermined name was read from the PM code determines whether or not the creation of a hibernation file is appropriate at the drive (step 609).

## Description

### Field of the Invention

The present invention relates to information processing systems that operate with a low power consumption, and more particularly to a portable information processing system such as a notebook computer.

### Prior Art

As a result of recent technological innovation, small-size and light-weight portable computers have become common. When such portable computers are used outdoors, electric power is supplied to them with batteries. However batteries mounted on portable computers are restricted to small-size batteries. Thus the period for which personal computers can be operated without recharging the batteries is short. Consequently various kind of facilities or devices are provided for reducing the consumption of power in many portable computers.

A suspend/resume function is one of such facilities. When the suspend/resume function operates, the computer enters into a suspend mode. This may be in response to a situation such as no activity of an I/O device being detected for a certain time. In the suspend mode all tasks are suspended, and the main memory saves data required later for resuming the tasks. In the suspend mode, the main memory and the video memory (VRAM) are powered on, but CPU or the like are powered off. However, portable computers have a drawback in that the power of batteries are consumed when the suspend mode continues for a very long time with only the support of the suspend/resume function. This can result in the contents of the memory and the VRAM being erased.

Therefore portable computers which are supported with hibernation mode, such as the LTE Lite/25 manufactured by Compaq Company (Compaq and LTE are registered trademarks of Compaq Computer Corporation), have been proposed and marketed. When hibernation mode is enabled, the computer enters a low battery-use state. Otherwise, when the suspend mode continues for a certain time, the computers enter hibernation mode after saving onto the hard disk all the data required later for resuming the task. In hibernation mode, the whole system, including the memory and the VRAM, is powered off. When users power on the system later, the data stored in the hard disk is restored in the memory and the VRAM and the tasks which had been suspended are automatically resumed. The series of operation accompanying power-on is also referred to as wake-up.

It is necessary to secure in advance a space in a hard disk device for saving the content of the main memory and the VRAM. Some of the currently known systems secure it on a hard disk in an area exclusively used for hibernation mode. The user cannot change the setting of the area. However, since the quantity of information that can be saved is restricted in such systems, it is impossible to increase the main memory.

Then there is known a system in which an address for saving the contents of the main memory or the like serves a hibernation file supervised by an OS file system. With such a system, even when the main memory and the size of the region for storing data on the external storage device increase, the region can be easily secured again.

At the time of hibernation after the interruption of the OS and/or application, or at the time of wake-up prior to the resumption of the OS and/or application, data must be transferred from the hard disk. A code for realizing hibernation/wake-up (or store/restore) must be able to access hardware other than via the BIOS or via a driver supervised by the OS. The hibernation file must be created in a drive which the OS file system can naturally create.

However, when a plurality of logical drives exist, there often exists a logical drive which the above code cannot directly access owing to the difference in the I/F (interface) even if the plurality of logical drives seem to be the same as the utility for creating a hibernation file using an OS/file system. When a hibernation file is created, hibernation cannot be executed.

The present invention is made in view of the above points. The invention provides an apparatus for specifying a logical drive appropriate for creating a hibernation file and a method thereof.

### Summary of the Invention

The present invention provides a data processing system including a hibernation file creation device, a CPU, a volatile main memory and a plurality of logical drives and supporting a hibernation function by which, upon occurrence of predetermined conditions, a task is suspended and the contents of said main memory is saved to a hibernation file residing in one of the logical drives, before said main memory is powered off and being supervised by an OS file system, the save operation being implemented by code to which said one of the logical drives is directly accessible, other than via BIOS or a driver supervised by said OS, said hibernation file creation device including:
(a) means for identifying a logical drive of more than a predetermined size which is accessible by said OS file system and said code; and
(b) means for creating a hibernation file in said identified logical drive by using said OS file system.

Hence, a hibernation file can be created in an appropriate logical drive which is accessible to both the OS file system and the PM code, without requring access via BIOS or a driver supervised by OS, such that the hibernation file can be created in advance of OS resumption.

In accordance with a first embodiment of the present invention, said means (a) for identifying includes:
(i) a means for creating a file with a predetermined name to a logical drive which said OS file system can access and which is larger than a predetermined size by selecting one of said logical drives and using said OS file system;
(ii) a means for notifying to said code that said file with the predetermined name has been created;
(iii) means for determining whether or not the creation of the hibernation file at said drive is appropriate or not, by determining whether said file with the predetermined name can be read from said file; and
(iv) a means for actuating said means (i) to (iii) by selecting one unselected logical drive when said creation of the hibernation file at a selected logical drive is inappropriate: wherein said means (b) for creating a hibernation file creates a hibernation file on a logical drive that said means (iii) determines to be appropriate.

In accordance with a second embodiment of the present invention, said means (a) for identifying includes:
(i) means for creating a file with a predetermined name by selecting one logical drive which said OS file can access and which is larger than a predetermined size;
(ii) means for notifying to said code that a file with a predetermined name has been created;
(iii) means for determining whether or not the creation of the hibernation file at said drive is appropriate or not, by determining whether said file with the predetermined name can be read from said file;
(iv) a means for repetitively actuating said means (i) to (iii) until unselected logical drives cease to exist; and
(v) a means for presenting to the user a logical drive appropriate for creating a hibernation file, wherein said means (b) creates a hibernation file to said selected logical drive in response to a selection of one logical drive presented by the user.

### Detailed Description of Preferred Embodiment

The present invention will now be described in more detail, by way of example, with reference to the accompanying drawings in which:
Figure 1 is a view illustrating a hardware construction according to one embodiment of an information system using the present invention;
Figure 2 is a view illustrating a hardware construction element;
Figure 3 is a view illustrating a construction of a hibernation file;
Figure 4 is a view illustrating a drive accessible by the OS file system or the PM code;
Figure 5 is a flowchart showing steps executing POST;
Figure 6 is a flowchart showing operation procedures of the file preparation utility;
Figure 7 is a flowchart generally showing a sequence of hibernation/wake-up;
Figure 8 is a flowchart showing a saving operation procedure of the hibernation file;
Figure 9 is a view illustrating a file allocation list on a hard disk;
Figure 10 is a view showing file allocation information after conversion;
Figure 11 is a flowchart showing a restoration operation procedure from a hibernation file;
Figure 12 is a flowchart showing an operation procedure relating to the hibernation icon display;
Figure 13 is a view showing a screen including a hibernation icon;
Figure 14 is a view illustrating a screen including a hibernation icon;
Figure 15 is a flowchart showing in detail display operation of the hibernation icon;
Figure 16 is a view showing a hardware element relating to the FDD change line emulation;
Figure 17 is a flowchart showing the step included in the first method of the FDD change line emulation;
Figure 18 is a view illustrating the traps of I/O access in the first method;
Figure 19 is a view illustrating the relationship between the code and the trap in the BIOS/driver;
Figure 20 is a view showing a hardware element for realizing the second method of FDD change line emulation;
Figure 21 is a flowchart showing steps included in the second method; and
Figure 22 is a waveform view related with the second method.

### A. Construction of the System as a Whole

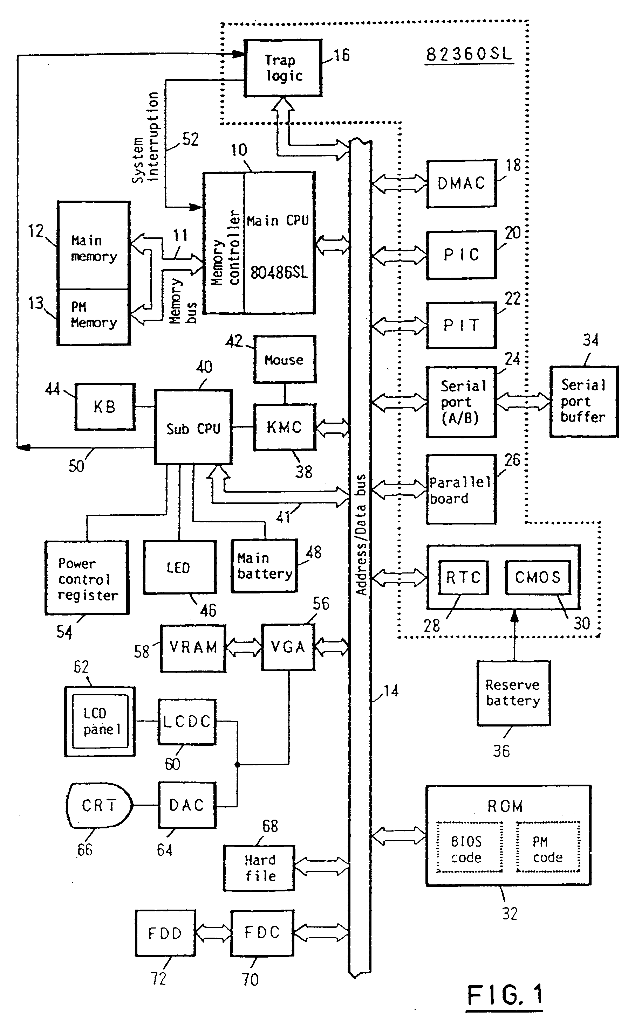

Figure 1 shows, in a simplified form, the structural elements of the main hardware in a notebook-type computer (simply referred to below as the system) embodying the present invention in a simplified form. Reference Numeral 10 designates a main CPU. In the embodiment, Intel's 80486SL incorporating a memory controller. The CPU 10 communicates with a main memory 12 and a PM memory 13 via a memory path 11. The main memory 12 loads a BIOS, a driver, an OS, and an application. On the other hand, a PM memory 13 stores a PM code (PMC) performing power management including the hibernation mode and the work data thereof. The PM memory is further separated into an area where the PMC is stored and an area where the work data is stored. The PMC is loaded from a ROM at the time of POR (power-on/reset).

It is possible to allocate different chips to the PM memory and the main memory, for example to use SRAM chips as the PM memory and to use DRAMs as the main memory. The embodiment uses the architecture of the 80486SL to allocate a specific area of each DRAM chip to the main memory 12 and the PM memory 13.

The PMC can access both the main memory 12 and the PM memory 13. On the other hand, the OS and the driver cannot access the PM memory 13. The memory controller can switch the communication of the CPU 10 so that the CPU 10 communicates either with the main memory 12 or with the PM memory 13.

The CPU 10 connects with a trap logic 16, a DMAC (direct memory access controller) 18, a PIC (programmable interruption controller) 20, a PIT (programmable interval timer) 22, a serial port 24, a parallel port 26, an RTC (real time clock) 28, a CMOS 30, and a ROM 32 via an address/data bus 14.

The output terminal of the trap logic 16 is connected with a specific pin of the CPU 10 by a system interruption line 52. The trap logic 16 constantly monitors a bus 14. When the trap logic 16 detects an access to an address set in the stored register, the system interruption line 52 is rendered active. The trap logic 16 activates the system interruption line 52 also when a signal 50 to be inputted to an external input terminal is rendered active.

The embodiment uses Intel's I/O chip set 82360SL, which is a collection of the trap logic 16, the DMAC 18, the PIC 20, the PIT 22, the serial port 24, the RTC 28, and the CMOS 30. In the 82360SL, the system interruption is referred to as an SMI (system management interrupt). When the SMI occurs, the memory controller enables communication between the CPU 10 and the PM memory 13 thereby initiating execution of the PMC which serves as an SMI handler. The SMI handler (PMC) detects the cause for the SMI to jump to a processing routine in accordance with the cause.

The serial port 24 is connected with one or more I/O devices via a serial port buffer 34. These I/O devices can voluntarily set either to (for example, 3F8 (H) or 2F8 (H)) a base address of I/O space allocated to the port 24.

The RTC 28 and the CMOS 30 are mounted on one chip. A reserve battery 36 powers on the chip even when the system is powered off. The reserve battery 36 can be a coin battery.

The ROM 32 stores a PMC in addition to a BIOS code. The POST (power-on self-test) which runs at the time of POR of the system loads the PMC from ROM 32 to the PM memory 13.

The CPU 10 receives a signal from a mouse 42 and a keyboard 44 via a KMC (keyboard/mouse controller) 38. In this embodiment, a processor (sub-CPU 40) which monitors a matrix of the keyboard 44 also serves as part of the power management function. The sub-CPU 40 monitors a matrix of the keyboard 44, a lid 46, and a main battery 48. When the sub-CPU 40 detects that a predetermined situation has occurred, namely, for example that a hot key has been pressed, the lid is closed, or the main battery 48 is in a low battery condition, a signal line 50 is rendered active. The sub-CPU 40 is connected with the bus 14 via a bus 41. Thus the sub-CPU exchanges instructions and data concerning power management (including hibernation) with the main CPU 10 via the bus 41.

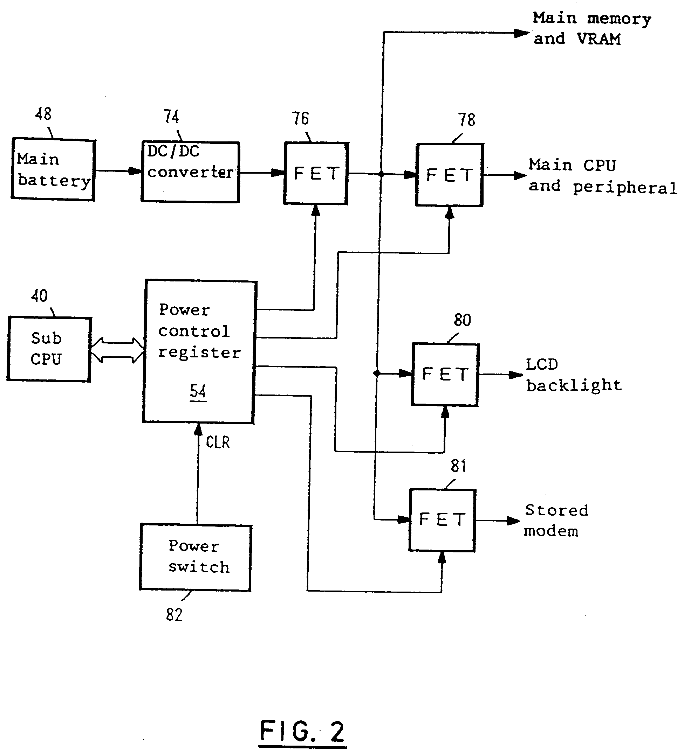

The sub-CPU 40 outputs a signal to the power control register 54 to instruct that each device is to be powered off or the whole system is to be powered off. Details thereof will be given later with respect to Figure 2.

The CPU 10 connects with a VGA chip 56 via a bus 14. The VGA chip 56 is a display controller, which controls an LCD panel 62 through an LCDC (LCD controller) 60 so that information is displayed in accordance with the content of the VRAM 58. Otherwise it is possible to mount a display unit including a CRT 66 and a DAC (digital analog converter) 64 as an option on the system. In such case, the VGA chip 56 controls the display of information on the CRT 66.

The system mounts as the external storage device a hard disk device 68 and an FDC (floppy disk controller) 70/ FDD (floppy disk drive) 72. The hard disk device 68 includes in the concept thereof a hard disk drive and a hard disk mounted within the hard disk drive. The hard disk device 68 will be referred to as a hard file hereunder. When the system enters into hibernation mode, a file (hibernation file) for storing data is prepared on the hard file. In accordance with the present invention, the hibernation/wake-up can be supported even when the hard file is removable.

In addition to the above hardware elements there are provided in actuality many I/F's (interfaces) on the system (for example, a bus transceiver is provided between the hard file 68 and the bus 14). Such elements are already known to those skilled in the art. They are not shown in the drawings for simplicity.

Next a power-on/off mechanism will be explained with respect to Figure 2. The output of a main battery is inputted into an FET switch 76 that can power off the whole system at one time. The output of the FET switch 76 is supplied directly to the main memory and the VRAM. On the other hand, the output of the FET switch 76 is supplied to an input terminal of LCD back-light power via an FET switch 80, to an integrated modem directly connected to the serial port 24 via an FET switch 81, and to the main CPU 10 and other peripherals via an FET switch 78, respectively.

Each of these FET switches is electrically connected with a bit cell which corresponds to a power control register 54. Thus a value the sub-CPU 40 sets to the register 54 controls the power-on/off of FET switches 76, 78, 80, and 81. When the system enters hibernation mode, the sub-CPU 40, upon receipt of the PMC instruction, sets a value for powering off the FET 76 to a corresponding bit thereby powering off the whole system, including the main memory and the VRAM. When the system enters a suspend mode, the sub-CPU 40, upon receipt of the PMC instruction, powers on the FET switch 76, and sets a value for powering off FET switches 78, 80, 81 in the register 54, thereby powering off the system except for the main memory and the VRAM.

The clear terminal of the power control register 54 is electrically connected to a power switch 82 of the system. Thus a signal generated when users power on the system resets a value of the register 54 thereby switching on all the FET switches and powering on the whole system.

### B. Construction of the Hibernation File

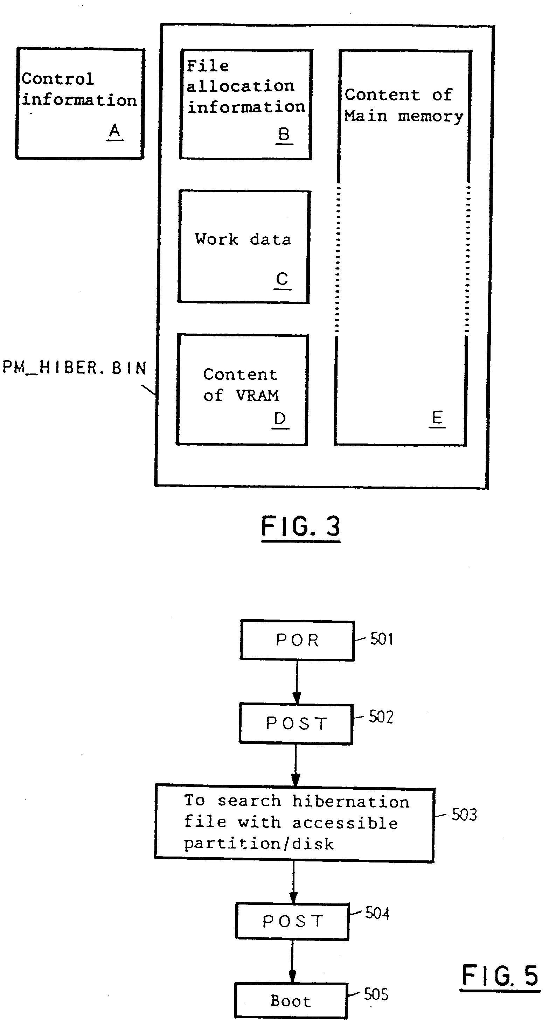

As shown in Figure 3, the embodiment secures on the hard disk a location for a block A for the control information, a block B for the file allocation information, a block C for work data in the PM memory, a block D for the content of the VRAM, and a block E for the content of the main memory. As will be detailed later, the control information is required immediately after the system is powered on. Such information includes system configuration information and respective start addresses for blocks B through D. Work data is other data required for hibernation. Work data includes hardware context information (described later) and different control flags. One example of control flag is a flag whose value can be converted by users for selecting whether the system beeps or not when it enters or exits the hibernation mode.

Blocks A through E may be a series of areas physically connected into one integration. However, the block A is at least required to reside in a fixed place on the disk. Thus, in the embodiment, only the block A is arranged at the head of a CE cylinder (which is reserved but cannot be accessed by users) that is defined on the innermost part of the hard disk. The point is that the place may be fixed, and the control information can be stored from a sector in the middle of the CE cylinder.

As will be detailed in section C, blocks B through E are a place where an OS file system is used to secure a place for one file in the user partition of a hard disk in the same dimension as the user file. File names are reserved, and they are given as PM_HIBER.BIN in this embodiment. Blocks B through E can be extended in length. When the hibernation file actually stores data, the start addresses for blocks C through E are determined. Sectors constituting blocks B through E normally reside physically on the hard disk in a scattering manner. Sector connection information is recorded in the form of a list in the file allocation information area (FAT when DOS is used as the OS) on a hard disk. As will be detailed in section D, the PMC converts sector connection information constituting PM_HIBER.BIN into unique allocation information and stores the converted information in the block B.

### C. Generation of Hibernation File

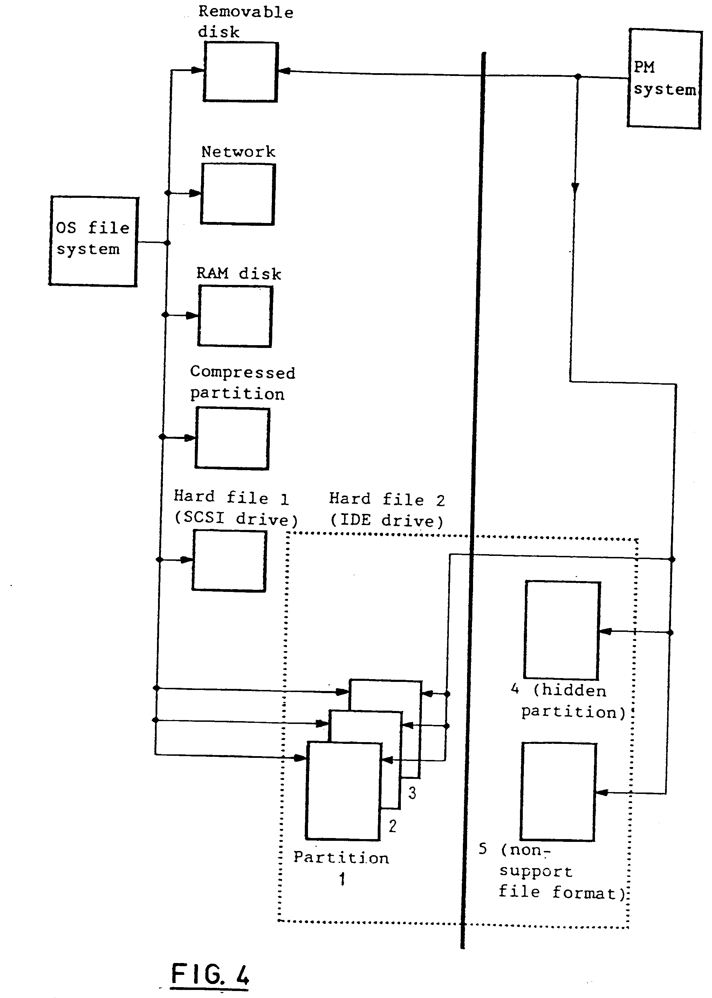

The generation of a hibernation file in accordance with the present invention will be detailed with respect to Figure 4 through Figure 6.

In accordance with the present invention, the OS file system is used to provide a hibernation file in the user partition of a block device such as a hard file or the like. For this purpose a file preparation utility (for example, an executable program (.EXE file)) is prepared for making a hibernation file. However, a plurality of block devices are available, the PMC cannot necessarily access all the devices directly (without passing through the driver/BIOS managed by the OS system file). That is because the PMC cannot directly access some devices just because the I/F (hardware) which seems to be the same drive PMC logically from the utility is not appropriate.

In the embodiment shown in Figure 4, the OS file system can access a removable disk (an optical disk, SSF (solid state file), an SRAM card and the like), a network drive (a remote file), a RAM disk, a compression partition, a hard file 1 serving as an SCSI drive, and partitions 1, 2, and 3 of a hard file 2 serving as an IDE drive. These are identical logic drives for the utility.

These drives are explained hereunder. At the outset, the network drive is a drive for a different system connected via a network. The PMC cannot access the network drive to transfer data for hibernation/wake-up. A RAM disk is an imaginary drive, and no I/F is prepared that the PMC can access (since the RAM disk is volatile by nature, the disk cannot hold data during hibernation mode).

The compression partition is a drive for storing compressed data. In the compression partition, a corresponding drive having a specific algorithm compresses data to be written in the drive or extends data to be read. The PMC cannot use the compression/extension algorithm because a driver corresponding to the compression partition can operate under the management of the OS file system. Consequently, the compression partition is inappropriate for preparing the hibernation file. In addition, when only the IDE drive is prepared as the I/F for the hard file the PMC can directly access, the PMC cannot access the hard file 1.

The partition 4 prepared on the hard file 2 is a hidden partition. In addition, the partition 5 is a drive having a format which is not supported on the OS file system. When DOS is used in the OS file system, the HPFS format of an OS/2 is not supported (OS/2 is a registered trademark of International Business Machines Corporation).

Even when the PMC can access these partitions 4 and 5, the OS file system cannot access these partitions 4 and 5.

Some of these drives turn out to be inappropriate for preparing a hibernation file when the utility refers to the OS file system. In the embodiment shown in Figure 4, the network drive is one such drive. However, for the utility, it is not clear as to whether the PMC can access other drives.

It is conceivable that a drive letter allocated to the drive may allow the utility to specify a hibernation file preparation file. However, the drive letter is different depending on an order in which a driver supporting a drive is installed. In addition, when a plurality of drives reside which can be booted, the utility cannot specify the drive in fixed manner by using a drive letter. On the other hand, the PMC cannot know a correlative relation between the drive and the drive letter.

The present invention identifies in the following manner a drive that the PMC can access and is suitable for the utility in preparing a hibernation file.

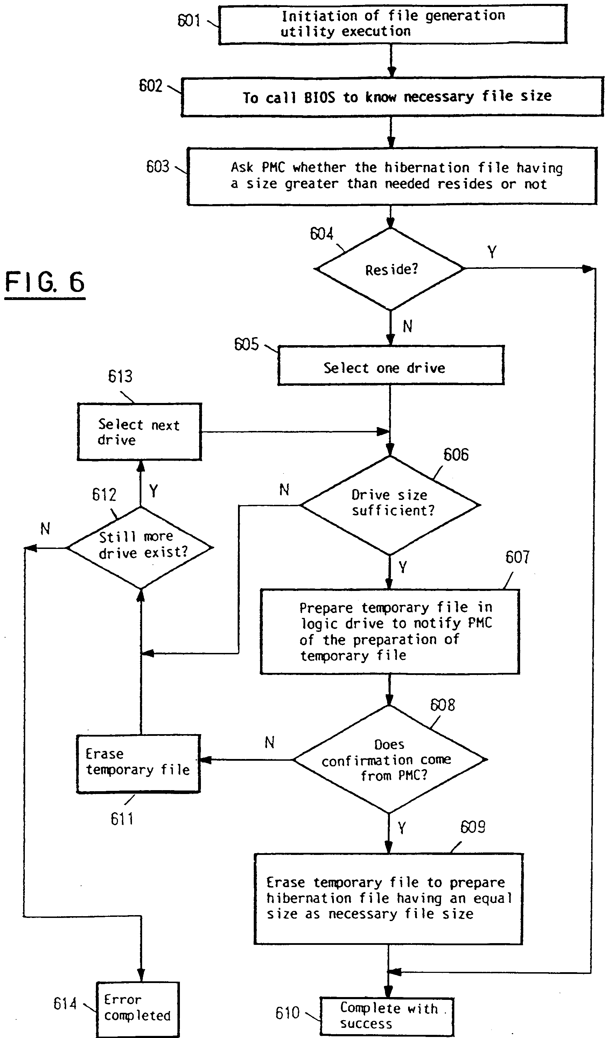

At the outset, the operation of the system at the time of the POR will be detailed with respect to Figure 5. When the power switch is turned on or when the system is reset, the POST program runs (step 502). When the POST completes loading the PMC in the PM memory, the PMC is executed temporarily. Each of the drives the PMC can access searches the hibernation file (PM_HIBER.BIN) (step 503). After the search is completed, the POST is executed again, thereby entering the procedure for a normal boot or a boot for wake-up (step 504, 505).

Next, a step executed by the hibernation file preparation utility will be described with respect to Figure 6. When the hibernation file is enabled by users who input a command or give an instruction via a graphical user interface, the file preparation utility begins to be initiated (step 601). At step 602, the utility calls BIOS to know the size required for the hibernation file (total size of the main memory, the work data area of the PM memory and the VRAM).

At step 603, a question is posed as to whether the hibernation file (PM_HIBER.BIN) having a size greater than needed to the PMC is detected in the search at step 503. If such a file resides, the file can be used for storing data. Thus the process after that is stopped.

When the response of the PMC is negative, the following step will be executed with respect to each drive the utility can access except for the drive which will turn out to be inappropriate like the network drive by referring to the OS file system.

At the outset, it is determined whether or not the size of the selected drive is more than the above necessary size (step 606). If the result of the judgment is affirmative, the OS file system is utilized to temporarily prepare a small file having a name reserved in the drive thereby notifying the PMC of the fact that the file is temporarily prepared (step 607). The name of the temporary file may be PM_HIBER.BIN or another name. The size of the file preparing it may be O.

The PMC which has been notified of the fact immediately attempts to read the temporary file. When the PMC has succeeded, it sends a confirmation to the utility. When the drive receives the confirmation from the PMC, the PMC can access the drive. The size of the PMC is also sufficient. Consequently, the utility erases the temporary file at the outset. After that, a hibernation file having the same size as the above necessary file and a name of PM_HIBER.BIN is prepared on the drive by using the OS file system (step 609).

When the PMC does not send the confirmation, the temporary file is erased (step 611). Then steps 606, 607, and 608 are repeated with respect to the selected files. When the drive size is insufficient, the steps 607, 608, and 611 are skipped. When the PMC does not send the confirmation with respect to any drive, the system notifies users of the fact that the hibernation cannot be executed by such means as sounding a beep or displaying a message. After that the operation series is finished (step 614).

In the above embodiment, a drive appropriate for preparing a file is detected, and a hibernation file is immediately prepared. As a modification of this embodiment, after checking whether or not the preparation of the hibernation file is appropriate with respect to the all the logic drives, a drive appropriate to the user may be proposed. In such a case, a drive appropriate for the user is prompted so as to be proposed to prepare a hibernation file on the drive selected by the user.

### D. Outline of Store/Restore Sequence

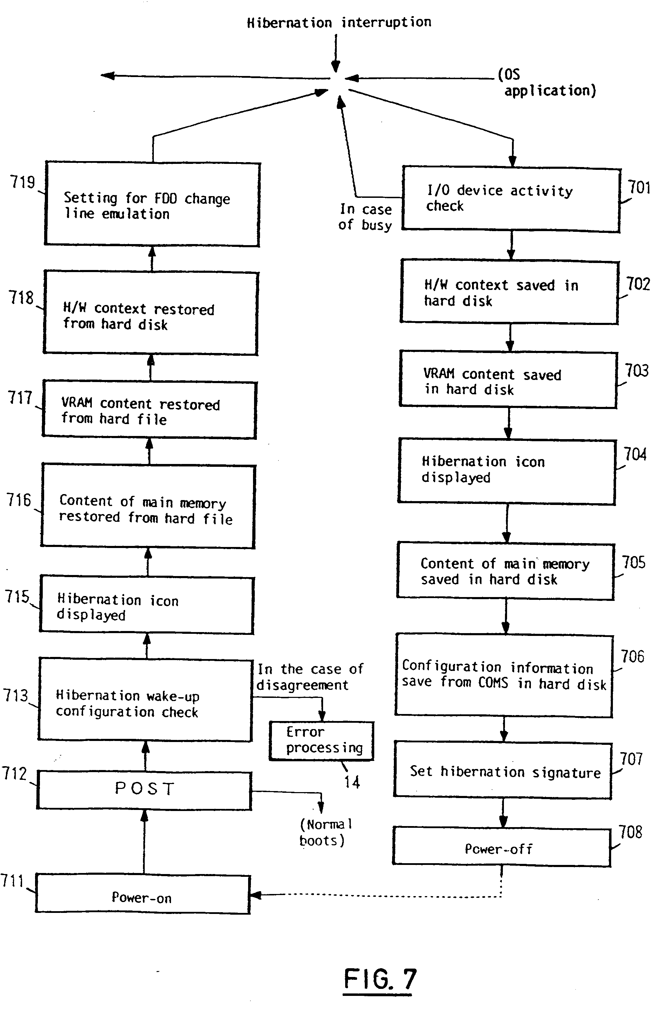

Referring to Figure 7, an outline will be explained with respect to the store/restore sequence in entering or exiting the hibernation mode. The processing from step 701 shown in the drawings up to step 708, as well as the processing from step 713 up to step 719, will be performed when the main CPU executes the PMC of the PM memory.

At the outset, a store/sequence will be described. As shown in Figure 1, when the sub-CPU 40 detects the occurrence of a predetermined situation (for example, a hot key has been pressed or the system is placed in a low battery state), a trap logic 16 transmits a system interruption signal to the main CPU 10. This triggers the suspend of a task that is currently executing, and the control of the system operation is shifted from the OS file system or an application to the PMC (a trap handler).

When the PMC analyzes the cause of the system interruption and determines that an external phenomenon imparted through a signal line 50 is responsible for the system interruption, the PMC jumps to the store operation execution routine so as to enter hibernation mode.

At the outset, the PMC checks the presence of activity in the I/O device (step 701). When activity is present (for example, DMA is executing), the check of the activity is repeated again after the elapse of a predetermined time (for example, 10 msec) to wait until no I/O activity is detected.

When I/O activity is not detected, the PMC saves hardware context information in the PM memory. In the next step, the system saves the whole work data, including the hardware context information, from the PM memory into the hard disk device (step 702). A typical example of hardware context information includes register values of each chip such as a CPU, an interruption controller, a DMA controller, a video controller, and count values of a timer.

At step 703, the PMC transfers original data of the VRAM to the hard disk device. At this time, data of the VRAM may be compressed for storage on a hard disk. At step 704, an icon image indicating that saving operation is effected for hibernation is written in the VRAM to be displayed in a display device.

The PMC transfers original data of the main memory to the hard disk device while displaying an icon (step 705). At this time, data in the main memory may be compressed for storage on the hard disk. At step 706, system configuration information is saved from the CMOS in the hard disk device. A typical example of system configuration information includes the type and number of optional devices connected to the main body of the system (portable computer) and the size of the main memory.

At step 707, the PMC sets the hibernation signature indicating that the above sequence has been passed. The hibernation signature is 2 byte information, which is one item of control information stored in area A shown in the drawing.

Finally the PMC sends a command to the sub-CPU to power off the system (step 708).

Next, the restoration sequence will be explained. When the system is powered on, the main CPU executes the POST (power on self test) program stored in the ROM (step 712). The POST performs the following operation.
(i) When the system configuration is modified such as an increase in the memory during the power-off, or the modification in the number of the FDD, the POST detects such modification, directly or indirectly rewriting the system configuration information of the CMOS by using the set-up program.
(ii) As an operation related with FDD, the system checks as to whether or not the FDD/FDC normally operates, the system needs to be booted from the FDD prior to the hibernation wake-up, and FDD is removed and another unit or device is attached.
(iii) The PMC is transferred from the ROM to the PM memory.
(iv) The hibernation signature is checked.

When the system needs to be booted from the FDD, or when the system is powered off not via steps 701 through 708, the system enters into a procedure for normal boot without the transfer of the control rights over the system operation to the PMC. When a hardware error is detected such as the absence of normal operation of the FDD/FDC, the system stops.

In this way, in accordance with the present invention, personal history information as to whether or not the system has passed the hibernation sequence is retained in the hard disk device without retaining it in other elements in the system. At the time of POR, the POST utilizes the personal history information in the hard disk device to determine whether a hibernation wake-up or a normal boot is effected. Consequently, a removable hard disk device is carried to enable the task with other machines provided with the function identical to the machine which performs the storing operation to be resumed. In other words, a frozen system environment can be freely moved.

When the presence of the hibernation signature, namely the hibernation context, is confirmed, the control rights over the system move from the POST to the PMC. At the outset, the PMC compares the hard disk with the system configuration information of the CMOS (step 713). When a disagreement between the hard disk and the system configuration system is detected, an error message is displayed with an icon or the like to prompt the system to allow users to select either of the following operations; to invalidate the current hibernation signature, or to restore the system configuration before modification by powering off the system (step 714). Moreover, when the restoration of the system configuration is prompted, the system configuration prior to the modification is proposed to guide users.

When the hard disk device is removable, there is a great possibility that an environment when data is saved in a hard disk (first environment) is different from the environment when the system is in a wake-up state (second environment). For example, in some cases, the size of the main memory may be smaller in the second environment. Furthermore, whereas an application was running which demands that the base address of the I/O device be a specific value, the specific value may not be obtained in the second environment. Furthermore, an application was executed which accesses a floppy disk in the first environment. There is no floppy disk drive in the second environment. In such a case, various disadvantages are produced; wake-up itself becomes impossible, the resumed task destroys data, etc. Thus the function of checking the system configuration is important.

When it is confirmed that the environment allows the wake-up function, the PMC writes an icon image that the PMC is being restored (wake-up) onto the VRAM so as to display it on the display device (step 715). The PMC, while displaying a hibernation icon, restores the original data of the main memory from the hard disk (step 716). Later, the icon is erased, and the original data of the VRAM is restored from the hard disk (step 717). At step 718, work data including hardware context information is restored in the PM memory. Then hardware is restored to an address such as an I/O device and the CPU register thereof. At the final step, the PMC performs setting for FDD change line emulation (step 719). After the above sequence, the control right of the system is shifted to the OS file system and an application. After the point of interruption, task execution is resumed.

### E. Details of Saving/Restoring Operation to the Hibernation File

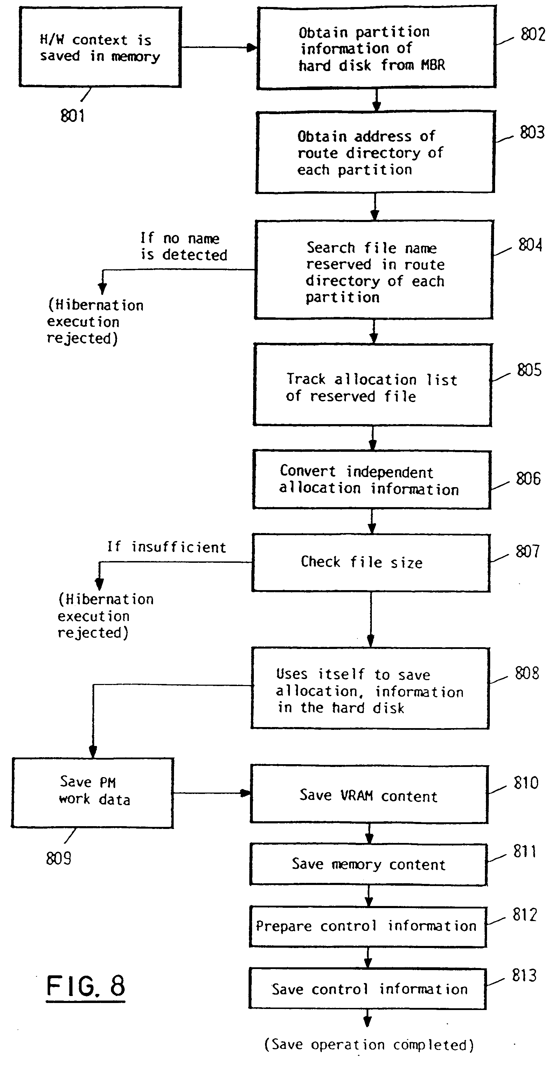

The operation of saving data into the hibernation file (PM_HIBER.BIN) (steps 702, 703, 704, 705, 706, and 707) will be more specifically detailed in conjunction with Figure 8.

At the outset, the PMC stores hardware context information in the PMC region of the memory (step 801). Thus if the hardware context information is saved at the outset, the hardware context information can be modified to facilitate the later saving operation.

At step 802, a master boot record (MBR) of the hard disk is accessed to obtain partition information (start address and size of each partition) of the hard disk device. The MBR is a cylinder which is defined at the outermost region of the hard disk. The cylinder is reserved which cannot be accessed by users.

At step 803, the PMC obtains an address of the route directory of each partition except for a partition smaller than a predetermined value. Since the address calculation method is common knowledge, details are not given here. For example when a DOS serves as the OS file system, the BIOS parameter block (BPB) located at the front of the partition is referred to to calculate an address of the route directory of the partition.

At step 804, a directory where the address is calculated is sequentially accessed to search for the name of the file (PM_HIBER.BIN). If PM_HIBER.BIN is not detected in any of the directories, the execution of the hibernation file is rejected, and the rejection is notified of to users by means of beep or a display of a message of the rejection.

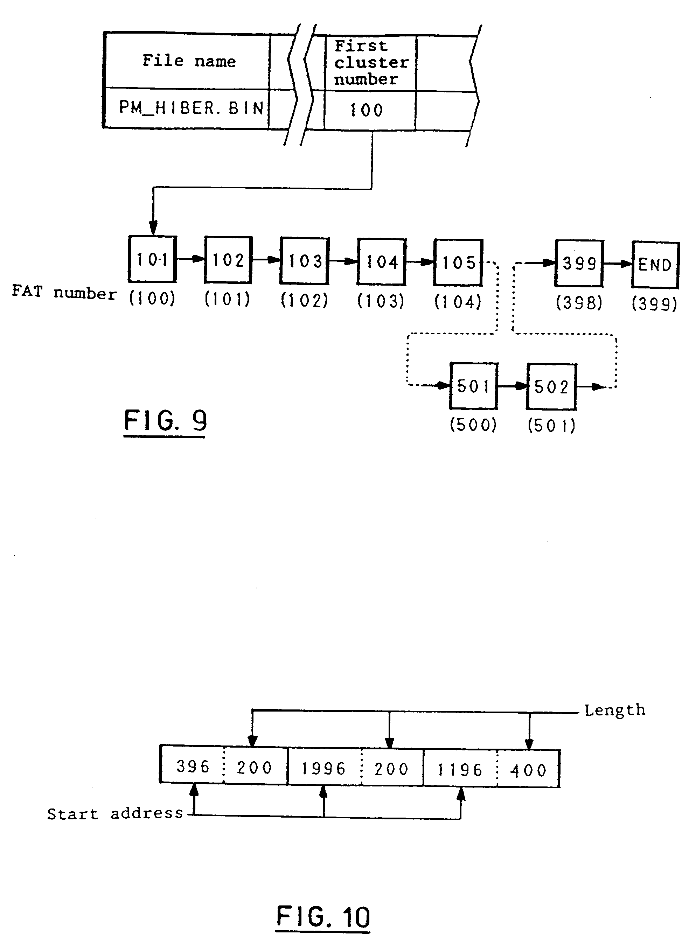

When PM_HIBER.BIN is detected, the file allocation list is tracked (step 805). Figure 9 shows as an example a case in which DOS is given as the OS file system, the file allocation given when four sectors are defined as one cluster is divided into a sector block which begins from cluster 100 and continues up to cluster 149, a sector block which begins from cluster 500 and continues up to cluster 549 and a sector which begins from cluster 300 and continues up to cluster 399. The entry of PM_HIBER.BIN in the route directory describes the first cluster number 100. As is already known, the FAT (file allocation table) is provided in each cluster on the basis of a 1 to 1 ratio. The FAT describes subsequent cluster number (namely FAT number) or a special number designating the last of the file. At step 805, the PMC accesses the hard disk one or more times thereby tracking 200 FAT list.

The file allocation information obtained in this way is converted into a unique allocation information suitable for the store/restoration at step 806. Figure 10 shows the formatting of information after the above conversion. Illustrated example corresponds to Figure 9. The PMC generates 8-byte long piece of data in which is recorded a front sector address (relative address from the sector address physically in front of the address) and the length (sector number). The allocation information after conversion is temporarily buffered in the work data area of the PMC memory.

Referring again to Figure 8, at step 807, the PMC checks whether or not the file size of PM_HIBER.BIN can support the total size of the work data of the currently mounted VRAM, main memory, and the PM memory. For example, when the main memory is increased after the hibernation file is generated, not all the data can be saved. Then when the file size is not sufficient, the system reject the execution of the hibernation. The fact is notified by means of beep or the like.

When the file size is sufficiently large, the allocation information generated at step 806 itself is used to save the allocation information from the PMC to the hibernation file (step 808). Later work data, the content of VRAM, and the content of the main memory are each saved in the hibernation file (steps 809 through 811). When transferring the data to the hard disk, the file allocation information in the PMC memory is referred to.

Lastly, the control information is prepared so as to save it in the control information area (area A in Figure 3) (steps 812 and 813), The control information items include a start address respectively for blocks B, C and D shown in Figure 3, the current system configuration information located in the CMOS and the hibernation signature. Thereamong, the system configuration information includes the base I/O address of the device, the size of the main memory, and the device configuration (type and number of devices). The base I/O address indicates that which of the two the base address is 3F8 (H) or 2F8 (H), for example, with respect to each device connected to the serial port.

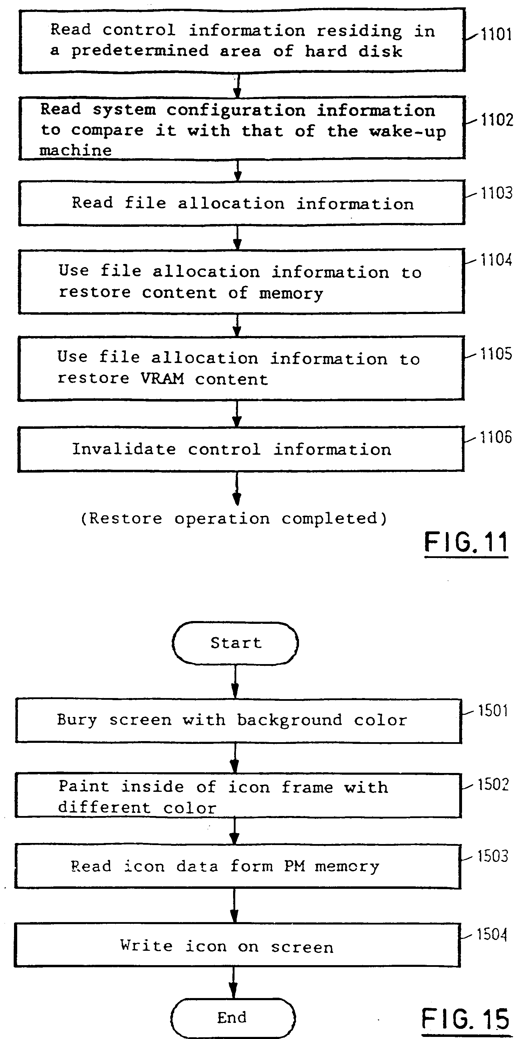

Next, referring to Figure 11, the data restoration operation (steps 713, 716 and 717) will be more specifically described from the hibernation file (PM_HIBER.BIN).

At the outset, the PMC accesses the control information area of the CE cylinder to read the control information located there in order to know the position of the hibernation file on the hard disk (step 1101). Since the address in the control information area is fixed, the address can be immediately accessed. At step 1102, the system configuration information included in the control information is compared with the system configuration information in CMOS of the wake-up machine.

At step 1103, the PMC uses the start address included in the control information to access the file allocation information block on the hard disk so as to restore the file allocation information in the PMC. The PMC uses the file allocation information to restore the content of the main memory at the outset and then to restore the content of the VRAM (steps 1104 and 1105). At these steps, the main memory block included in the control information area and the start address of the VRAM block are utilized. Lastly, the control information on the hard disk is invalidated so as to complete the restoration operation (step 1106). Since the hibernation signature is also invalidated, the power-on operation boots the system by the normal procedure as long as the system does not enter hibernation mode.

Furthermore, explanation is omitted, but in actuality, there is a step exhibiting a hibernation icon between steps 810 and 811 of Figure 8 and between steps 1103 and 1104 of Figure 11. Attention should be paid to the fact that there is a step for restoring H/W context information between steps 1105 and 1106 of Figure 11.

The position information of sectors constituting a hibernation file on the hard disk is managed by the OS file system in the form of a complex list. Therefore, in accordance with the present invention, before data transfer to the hibernation file is initiated, the complex list managed by the OS file system or the driver is accessed so as to obtain the position information of these sectors thereby converting the position information into its independent allocation information and inputting the information into the buffer (PM memory). Then when data is transferred from the VRAM and the memory to the hard disk device, its independent information is exclusively referred to know the sector position of the file. Consequently, when data is transferred to the hard disk, the file allocation information area such as the FAT area on the hard disk may not be accessed thereby enabling accelerating the saving operation.

Furthermore, in accordance with the present invention, allocation information on an independent hibernation file prepared in executing the saving operation is written on part of the hibernation file. At the same time, the start address thereof is written on a block located on a fixed address on the hard disk. When data is transferred from the hard disk device to the VRAM and the memory, the allocation information stored in the file is referred to so as to know the position of the sectors constituting the file. Consequently, when data is transferred from the hard disk device, the file space allocation information areas such as the FAT area on the hard disk need not be accessed. Thus, upon wake-up, the frequency of access to the hard disk for obtaining the allocation information of the hibernation file can be minimized thereby enabling accelerating the restoration operation.

### F. Icon Display Operation

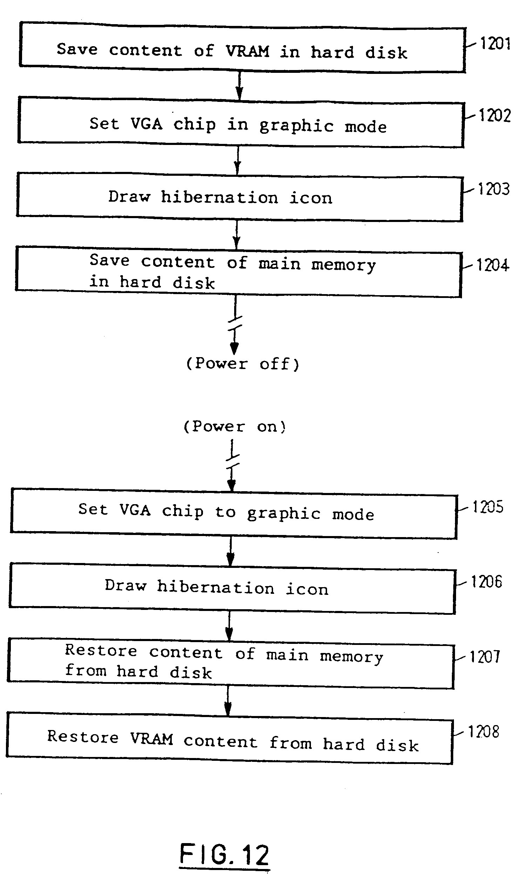

Referring to Figure 12, an operation related with the icon display (steps 703 through 705 and steps 715 through 717) will be described more concretely.

In accordance with the present invention, the content of the main memory and the content of the VRAM are divided for the management thereof. When the system enters into hibernation mode, the PMC saves the content of the VRAM on the hibernation file (step 1201). After the original data is saved, a VGA chip (video controller) is set to a graphics mode, and the icon image is written on the VRAM to display the image on a display device connected with the main body of the system (steps 1203 and 1204). While data is transferred from the main memory to the hard disk, the icon continues to be displayed.

Upon wake-up, a VGA chip is set to a graphics mode, and the icon image is written on the VRAM to display the image on a display device (steps 1205 and 1206). While data is transferred from the hard disk to the main memory, the icon continues to be displayed (step 1207). The original data of the VRAM is restored thereafter (step 1208).

While the VRAM is being accessed (steps 1203 and 1208), the icon is not displayed. However, the period when the VRAM is being accessed is sufficiently short compared with the period when the main memory is accessed (steps 1204 and 1208). At steps 1203 and 1208, the period when the icon is not displayed is just such a moment and has poses no practical disadvantage at all.

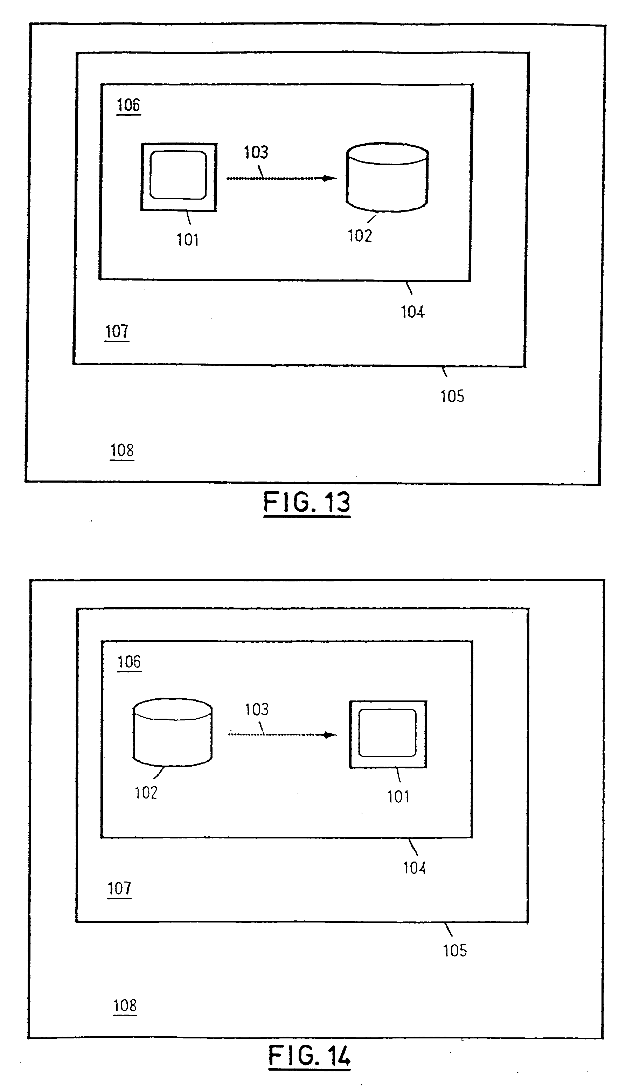

Figure 13 shows one example of a screen shown at step 1203. Icon 101 designates a system, 102 a hard disk device, and 103 the direction of data transfer. These icons are surrounded by icon frames 104 and 105. The color of area 106 inside of icon frame 104 and the color of area 107 are different from the background 108.

Figure 14 shows one example of a screen shown at step 1208 of Figure 12. The design of this example is the same as the counterpart of Figure 13 except that the position of icons 101 and 102 have been changed.

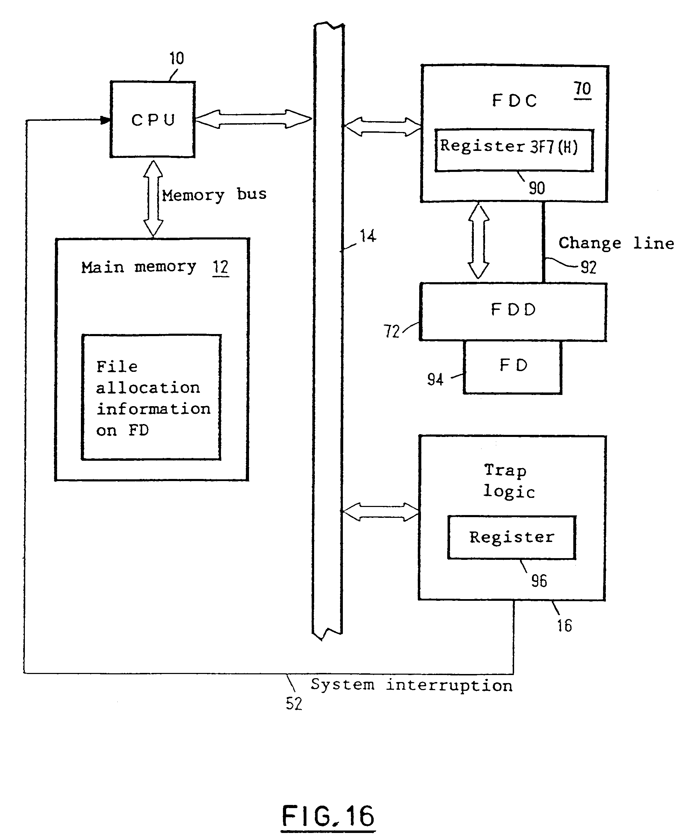

Referring to Figure 15, icon drawing step common in steps 1203 and 1206 of Figure 12 is specifically explained. At the outset, the PMC sets the data of the background color over the whole VRAM to bury the screen with the background color (step 1501). Then, the PMC paints the areas 106 and 107 inside of the icon frame with the color different from the background (step 1502). As shown in Figure 13, 14, areas 106 and 107 are simple squares so that the program (PMC) designates the position thereof on the screen to paint the inside very easily. At steps 1503 and 1504, the image data of the icons 101, 102, and 103 are read from the PM memory so as to set them on the VRAM. Since icon images are small in data quantity, the images are stored in the ROM in advance so that they are written on the PM memory at the time of POR.

The hibernation icon may be a static image. However, when data is transferred between the hard disk and the main memory, the VRAM is regularly accessed to rewrite the content so as to change the hibernation icon along with the time: For example, to blink an arrow icon 103 or to add an image showing the quantity of saved/restored data in the system icon 101.

In this way in accordance with the present invention, the block of the main memory and the block of the VRAM data are divided for management. When the system enters into hibernation mode, the original data of the VRAM is stored at the outset. Later, the original data of the main memory is stored. Furthermore, when the system is in the wake-up state, the original data of the main memory is restored before the original data of the VRAM is restored. Namely, the access procedure to the VRAM and the access to the main memory is made different whether it is the saving operation or the restoring operation.

Suppose that the main memory and the block of the VRAM data are not divided for the management. When the content of the VRAM is saved before the main memory is saved, the content of the VRAM must be restored prior to the content of the main memory. Consequently, when the system enters into hibernation mode, an icon cannot be displayed at the time of wake-up even if an icon is displayed. Conversely, if the contents of the main memory is saved first and then the contents of the VRAM, an icon cannot be displayed upon entering hibernation mode.

Consequently, to display icons without destroying the original data in the VRAM at the time of entering hibernation mode and at the time of wake-up, it is essential to change the sequence of access to the VRAM and to the main memory from the time of saving operation to the time of restoring operation by dividing the block of the main memory data and the block of the VRAM as proposed in the specification of the present application.

### G. FDD Change Line Emulation

Referring to Figures 16 and 22, an FDD change emulation will be explained which is supported by the PMC.

Figure 16 is a view showing a hardware element relating to an FDD change line emulation extracted from Figure 1. Elements not shown in Figure 1 include an FD (floppy disk) 94 mounted in an FDD, a change line 92 between the FDD and an FDC, a change line status register 90 in the FDC, and a trap register 96 storing an address that should be monitored in the trap logic.

A method for accessing the FD normally differs depending upon whether the FD has been accessed or not in the past. When the FD has been accessed (read/written) already in the past, the file allocation information (FAT when DOS serves as OS file system) read at that time is saved in a predetermined memory address managed by the OS file system. Consequently, it is not necessary to read the allocation information from the FD. In this way access to the FD from the second time onward is accelerated.

The following mechanism generally determines whether or not the allocation information on the FD in the main memory is valid. The change line connecting the FDD to the FDC is a signal line used exclusively for monitoring the attachment of the FD on the FDD and the detachment thereof. When the system is powered on, the change line is automatically activated. Then POST accesses the FDD through the FDC to detect the presence of the FD, and the change line automatically becomes inactive. When the FD is not detected, the change line remains active. In addition, when an FD is inserted, the change line becomes active. When the inserted FD is actually accessed, the change line automatically becomes inactive. When the FD is ejected, the change line becomes active again. In the embodiment, the high state corresponds to an active state whereas the low state corresponds to an inactive state.

The flag reflects the status of the change line. The bit 7 of the change line status register (register 90 in Figure 16) to which an I/O address 3F7 (H) is allocated is a flag (change line status flag) at that time. The bit 7 shows that the change line is active when the value assumes 1, whereas it shows that the change line is inactive when the value assumes 0.

The BIOS or the driver directly access the FDC (for example, BIOS when the DOS serves as the OS file system, and the driver when OS/2 serves as the OS file system). The BIOS/driver reads the content of the change line status register, and when the bit line 7 assumes 1, the allocation information on the FD in the main memory is invalidated (flashed) and reads the new file allocation information on the FD.

So, when the system enters hibernation mode, the FD is inserted in the FDD. In addition, when the FD has already been accessed, the file allocation information of the FD is saved on the hard disk and restores in the memory when the system is woken up.

Then in the case where the FD is exchanged in hibernation mode, the POST detects that the FD resides in the FDD. When the wake-up sequence is finished, the change line signal has become inactive. Consequently the BIOS/driver has a disadvantage in that it determines the restored file allocation information on the old FD to be valid and uses that information to access the FD currently inserted in the FDD and reads mistaken data, thereby destroying the data on the FD. There is also a possibility that like problems will arise in the case of resumption after suspension.

Problems accompanying the exchange of media in suspension or hibernation also exist in card-type memory media (such as SSF). However, in the case of such media, well-furnished software has been prepared. Such software may be used to solve the problem. In other words, the system enters into a low power consumption mode with the card mounted on the system. When the system leaves this mode, the software fakes to the system as if the card has been detached at the time of entering the low power consumption mode. On the other hand, when the software is resumed or woken up, it fakes to the system as if the card has been mounted. Upon receipt of such a fake, the system invalidates the file allocation information on the card in the main memory, and obtains new allocation information. In this way when entering and exiting low power consumption mode the software performs a fake operation to the system with the software so as to stop sending electricity to cards.

However, in the case of the FD a method is established in which the status of the status change line signal varies with a predetermined timing in terms of hardware, the status being read by the CPU. While harmonizing such an established method to solve the above problem resulting from the exchange of FD that has been executed in a low power consumption mode, a means has to be taken different from the means taken with respect to the card-type memory medium.

Therefore, the present invention fakes its status by taking an occasion when the BIOS/driver checks the change line status plug for the first time after waking up or after finishing the sequence. Thus even if an FD is inserted into the FDD, the software fakes to the system as if the FD has been removed from the FDD thereby flashing the file allocation information on the FD. Specifically, there are two methods that can be used.
(1) An access to the change line status register is trapped so as to temporarily fake a value of the change line status flag.
(2) A board is prepared which allows the operation of a change line signal through hardware.

Each of the above methods will be explained with respect to the case of a wake-up generated from the hibernation mode. However, please take note of the fact that the present invention can be applied to a resumption that is generated from the suspend mode.

(1) The most recent portable computers provide a mechanism that traps I/O access. Such mechanism can be realized by a combination of Intel's 80486SL(CPU) and 82360SL(trap logic). When the I/O address is set in the register (register 96 in Figure 16) in 82360SL, 82360SL issues a system interruption to the system when 80486SL gives an instruction to access the I/O address. In response to the system interruption, the handler (PMC) is enabled. When it has been determined that the system interruption has been caused by an access to a predetermined I/O address after analyzing the cause of the interruption, the system jumps to the trap routine.

Conventionally the trap mechanism has been used to power on a device that has been powered off when a command is issued to access the device before accessing the device. The first method for faking the change line status is to use the trap mechanism.

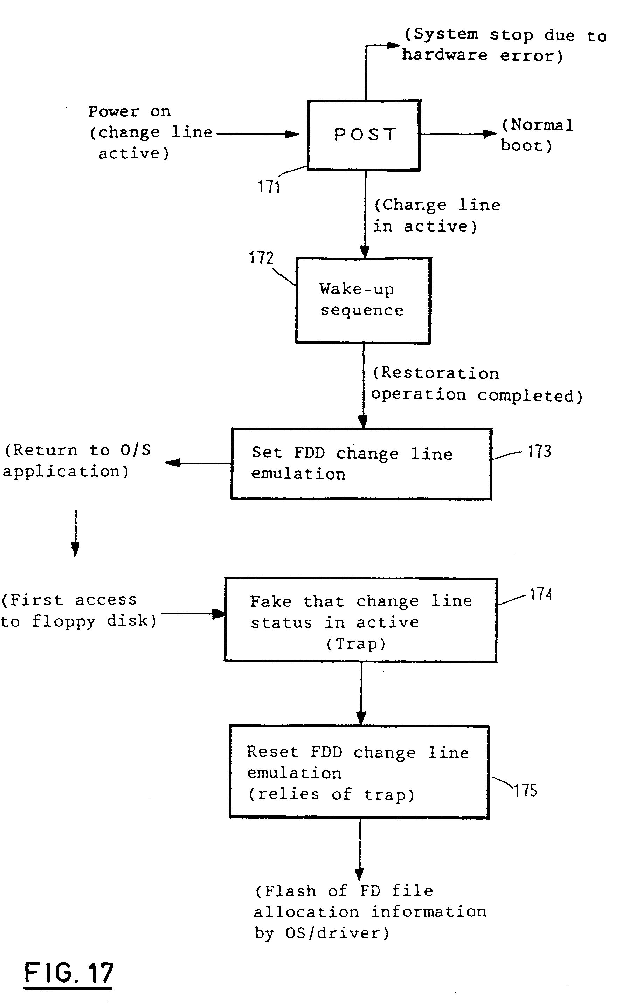

Referring to Figure 17, the flow of steps relating to the fake operation will be detailed hereinbelow. As has already been mentioned, once POST that runs after power-on confirms the hibernation signature, the system enters the wake-up sequence (steps 171, 172). The change line status is active at the time of power-on. However, when the POST detects that the FD remains inserted in the FDD, the system becomes inactive.

At step 173, the PMC sets the system in a status ready for the change line emulation. In concrete terms, the value of 3F7 (H) is set to the register 96 of the trap logic 16 (see Figure 16). After this step, the control right of the system returns to the OS/application.

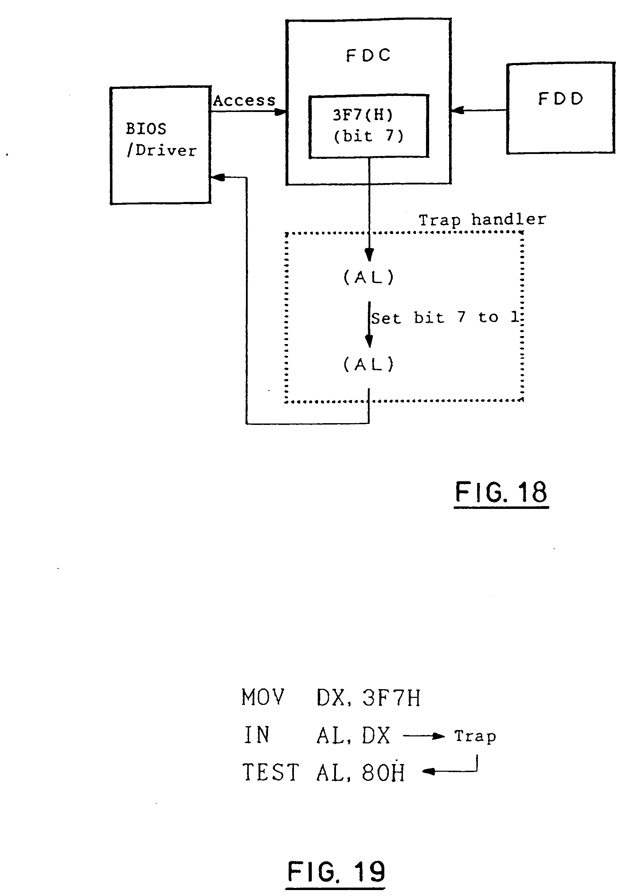

When the FD is accessed for the first time after resuming the OS/application execution, the fake of the change line status is performed (step 174). Step 174 will be further explained with reference to Figures 18 and 19.

Figure 19 shows part of the code of the BIOS/driver. When the command MOV DX, 3F7 (H) is executed, the DX register of the CPU loads 3F7 (H). Then when the command IN AL,DX is executed, I/O address 3F7 (H) is accessed so as to allow the AL register in the CPU to store the content of the change line status register. At this time, the system interruption is executed so as to perform the trap handler (PMC). The handler analyzes the cause of the system interruption thereby jumping to a routine of executing the trap of access to I/O address 3F7 (H). The routine sets a value of bit 7 in the AL register to 1 and brings it back to the BIOS/driver. Consequently, in the subsequent command TEST AL, 80H conveys to the BIOS/driver information that the value of bit 7 is set to 1. In response to this, the OS/driver flashes file allocation information in the FD into the memory. Then to access a desired file on the FD, the system reads allocation information in the FD.

Incidentally, the PMC clears a value set in a trap register before returning to the BIOS/driver (step 175 of Figure 17). Consequently, the change line status is not faked during access to the FD after the first time.

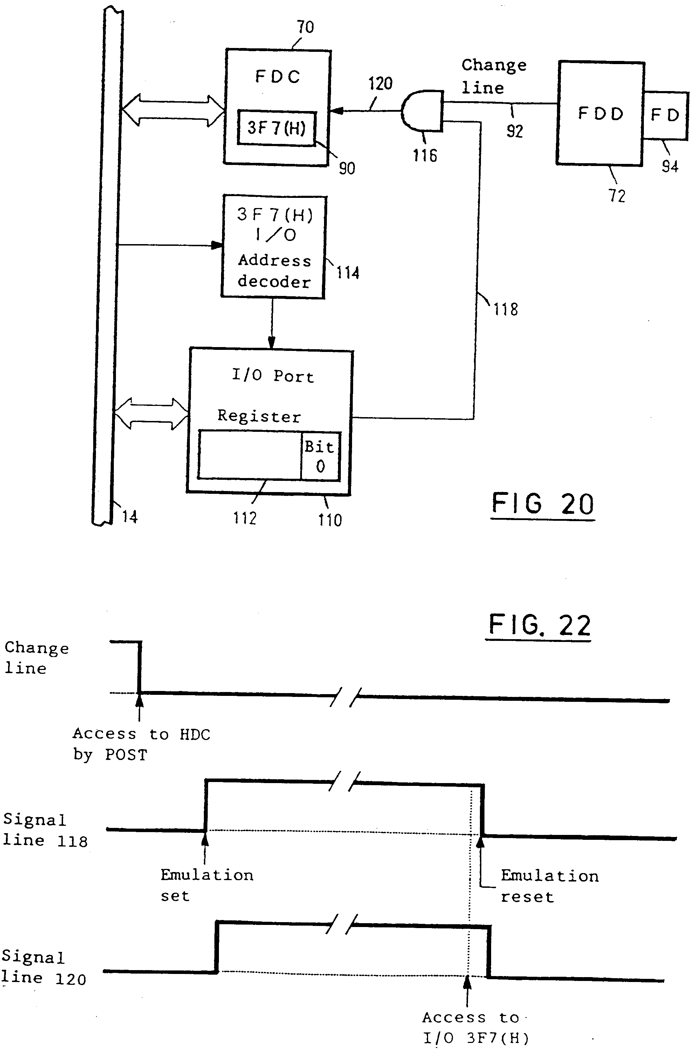

(2) The second method is realized by adding a hardware element to the board as shown in Figure 20. The added elements are an I/O port 110 incorporating a register 112, an I/O address decoder 114, an OR gate 116, and signal lines 118 and 120. A specific I/O address (1500 (H)) is allocated to the register 112. A signal showing a specific bit value (bit 0) of the register 112 is inputted to one input terminal of the OR gate 116 via a signal line 118. The change line signal is inputted from FDD 92 to the other input terminal of OR gate 116. The output terminal of the OR gate 116 is connected with bit 7 of the change line status register 90. The output of the OR gate 116 becomes a bit 7 value of register 90. The I/O address decoder 114 monitors the address bus 14 to decode the address signal 3F7 (H), thereby outputting a pulse signal to the I/O port 110. The output terminal of the decoder 110 is connected to the clear terminal of the register 112.

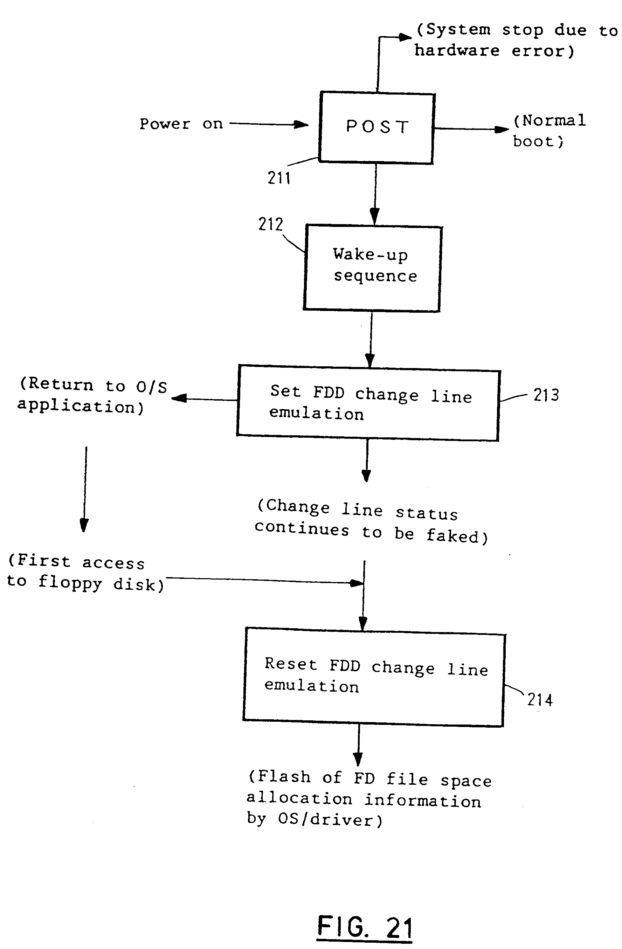

Referring to Figure 21, the step flow of method 2 will be described. Steps 211 and 212 are the same as steps 171 and 172 of Figure 17. Description on them will be omitted. At step 213, to set the FDD change line emulation the PMC commands I/O address 1500 (H) are indicated, thereby setting bit 0 value to 1. As a consequence, as shown in Figure 22, the change line status remains inactive to access FDC with POST. However, since the signal line 118 becomes active, the status of the signal line 120 becomes active. Consequently, 1 is set to bit 7 of the change line status register 90.

After step 213, the control right of the system returns to the OS/application. While the OS/application is executed, a value of bit 7 in register 90 remains at 1, and the fake status of the change line status continues.

When the BIOS/driver reads I/O address 3F (H) at the initial access to the FD after resuming OS/application, a value of bit 7 becomes 1. Thus, the OS/driver flashes file allocation information of the FD.

During an access cycle to the address 3F7 (H), a pulse is generated which clears the register 112 from the decoder 114. Thus an input to the OR gate 116 both becomes inactive. The bit 7 status of the change line register 90. The FDD change line emulation reset (step 214) is executed in this way, unlike the first method.

Some systems do not have a trap mechanism. In some cases even when some systems have a trap mechanism, the performance of the trap mechanism is restricted. In such a case, the second method is effective.

According to the present invention, it becomes possible to specify a logical drive appropriate for creating a hibernation file. This solves the problem in the prior art of the creation of a hibernation file in an inappropriate logical drive disabling the execution of a hibernation file.

## Claims

1. A data processing system including a hibernation file creation device, a CPU, a volatile main memory, and a plurality of logical drives and supporting a hibernation function by which, upon occurrence of predetermined conditions, a task is suspended and the contents of said main memory is saved before said main memory is powered off to a hibernation file residing in one of the logical drives and being supervised by an OS file system, the save operation being implemented by a code to which said one of the logical drives is directly accessable, other than via BIOS or a driver supervised by said OS, said hibernation file creation device including:
(a) means for identifying a logical drive of more than a predetermined size which can access said OS file system and said code; and
(b) means for creating a hibernation file in said identified logical drive by using said OS file system.

2. A data processing system according to claim 1 wherein said means (a) for identifying includes:
(i) means for creating a file with a predetermined name to a logical drive accessible by OS file system and which is larger than a predetermined size by selecting one of said logical drives and using said OS file system;
(ii) means for notifying to said code that said file with a predetermined name has been created;
(iii) means for determining whether or not the creation of the hibernation file at said drive is appropriate, by determining whether said file with the predetermined name can be read by said code;
(iv) means for actuating said means (i) to said means (iii) by selecting one unselected logical drive when said creation of the hibernation file at a selected logical drive is inappropriate: and wherein said means (b) creates a hibernation file on a logical drive that said means (iii) determines is appropriate.

3. A data processing system according to claim 1 wherein said means (a) for identifying includes:
(i) means for creating a file with a predetermined name by selecting one logical drive accessible by said OS file and which is larger than a predetermined size;
(ii) means for notifying to said code that a file with a predetermined name has been created;
(iii) means for determining whether or not the creation of the hibernation file at said drive is appropriate, by determining whether said file with the predetermined name can be read by said code;
(iv) means for repetitively actuating said means (i) to said means (iii) until no unselected logical drive exists; and
(v) a means for presenting to users a logical drive appropriate for creating a hibernation file, and wherein said means (b) creates a hibernation file to said selected logical drive in response to the selection of one logical drive presented by the user.

4. A data processing system according to claims 2 or 3 wherein said means (i) notifies said OS file system of a logical drive having an attribute inappropriate to creating a hibernation file, to remove said specified logical drive from possible selection.

5. A data processing system according to any one of the preceding claims, wherein said means (a) calls BIOS to obtain a value of said predetermined size.

6. A data processing system according to any one of the preceding claims, wherein said predetermined size is a sum total provided by adding the sum of the main memory and the video memory to the quantity of work data including the hardware context. of work data including the hardware context.

7. A method for creating a hibernation file in a data processing system including a hibernation file creation device, a CPU, a volatile main memory, and a plurality of logical drives and supporting a hibernation function by which, upon the occurrence of a task being suspended, the contents of said main memory is saved to a hibernation file residing in one of the logical drives and being supervised by an OS file system before said main memory is powered off, the save operation being implemented by code to which said one of the logical drives is directly accessible, other than via BIOS or a driver supervised by said OS, said method comprising the steps of:
(a) specifying a logical drive accessible by said OS file system and said code and which is larger than a predetermined size; and
(b) creating a hibernation file to said specified logical drive by using said OS file system.

8. A method for creating a hibernation file according to claim 7, wherein said step (a) includes the steps of:
(i) creating a file with a predetermined name in said logical drive by selecting one such logical drive which said OS file system can access and which is larger than a predetermined size and uses said OS file system;
(ii) notifying to said code that said file with the predetermined size has been created;
(iii) determining whether or not the creation of a hibernation file at said drive is appropriate, by determining whether said file with the predetermined name can be read by said code, followed by proceeding to step (b) when the creation of the hibernation file is appropriate; and
(iv) executing steps (i) to (iii) by selecting one unselected drive when the creation of the hibernation file in a selected drive is inappropriate.

9. A method for creating a hibernation file according to claim 7, wherein said step (a) includes the steps of:
(i) creating a file with a predetermined name in said logical drive by selecting such logical drive which said OS file system can access and which is larger than a predetermined size;
(ii) notifying to said code that said file with the predetermined name has been created;
(iii) determining whether or not the creation of a hibernation file in said logical drive is appropriate, by determining whether said file with the predetermined name can be read by said code;
(iv) repeating steps (i) to (iii) until the unselected logical drives cease to exist;
(v) presenting to the user a logical drive appropriate for creating a hibernation file; and
(vi) proceeding to step (b) in response to the selection of one logical drive presented by the user.
